Europäisches Patentamt

European Patent Office

Office européen des brevets

(19)

(11) **EP 0 435 669 B1**

(12) **EUROPEAN PATENT SPECIFICATION**

(45) Date of publication and mention
of the grant of the patent:
**14.02.1996 Bulletin 1996/07**

(51) Int Cl.6: **H04M 19/00**

(21) Application number: **90314324.6**

(22) Date of filing: **27.12.1990**

(54) **Output stage for telephone interface circuit and telephone interface circuit**

Ausgangsstufe einer Schnittstellenschaltung für Fernmeldegerät und Schnittstellenschaltung für Fernmeldegerät

Etage de sortie pour un circuit d'interface de téléphone et circuit d'interface de téléphone

(84) Designated Contracting States:
**DE FR GB SE**

(30) Priority: **27.12.1989 IT 2286089**

(43) Date of publication of application:
**03.07.1991 Bulletin 1991/27**

(73) Proprietor:
**SGS-THOMSON MICROELECTRONICS S.r.l.**
**I-20041 Agrate Brianza (Milano) (IT)**

(72) Inventors:
• **Lari, Ferdinando**
**I-20059 Vimercate, Milano (IT)**

• **Pasetti, Mauro**
**I-20151 Milano (IT)**
• **Siligoni, Marco**
**I-20010 Vittuone, (MI) (IT)**
• **Lagana, Paolo**
**I-20146 Milano (IT)**

(74) Representative: **Robinson, John Stuart et al**
**Birmingham, B1 1TT (GB)**

(56) References cited:
**GB-A- 2 087 199**

• **PATENT ABSTRACTS OF JAPAN, vol. 8, no. 99 (E-243)[1536], 10th May 1984; & JP-A-59 15 357 (NIPPON DENSHIN) 26-01-1984**
• **PATENT ABSTRACTS OF JAPAN, vol. 7, no. 36 (E-158)[1181], 15th February 1983; & JP-A-57 188 173 (NIPPON DENKI) 19-11-1982**

# Description

The present invention relates to an output stage for a telephone interface circuit for connection between a telephone subscriber line and a telephone exchange. Such an output stage may be arranged to supply the subscriber line with a constant voltage at its terminals. The present invention also relates to a telephone interface circuit.

A two-wire telephone line used to connect subscribers' telephones to a telephone exchange may be supplied by a continuous voltage generator in series with which are connected other generators of voltage signals such as speech band conversation signals, ringing signals and, if necessary, signals to indicate charging of subscribers. When the subscriber line is supplied with a constant voltage at its terminals, the fundamental requirements for the recognition of the weaker signals and accurate reproduction of their waveform even over long distances are the accuracy and constancy in time of the value of the supply voltage applied to the line. An increase in the accuracy and stability of the line supply voltage reduces the difficulties of designing and constructing the telephone system connected to it.

JP-A-57188173 discloses an arrangement in which output amplifiers 2 and 3 are driven in antiphase by an amplifier 1 having inverting and non-inverting outputs. One of the output amplifiers (2) receives a DC reference voltage $V_+$, whereas the other output amplifier (3) receives a DC reference voltage $V_-$.

In modern monolithic integrated circuits known by the name SLIC ("Subscriber Line Integrated Circuit"), the generator of the continuous voltage supply to the subscriber line is generally made from a pair of operational amplifiers whose output terminals are coupled to the terminals of the line. The operational amplifiers are controlled in such a way that, in the absence of a signal, they maintain at their output terminals different potentials which are constant with respect to a reference potential and therefore supply a constant voltage to the line. By using operational amplifiers, a signal may be sent along the line simply by applying the signal to the non-inverting input of one of the two operational amplifiers, thus obtaining at the output the superimposition of a signal voltage on the continuous line supply voltage.

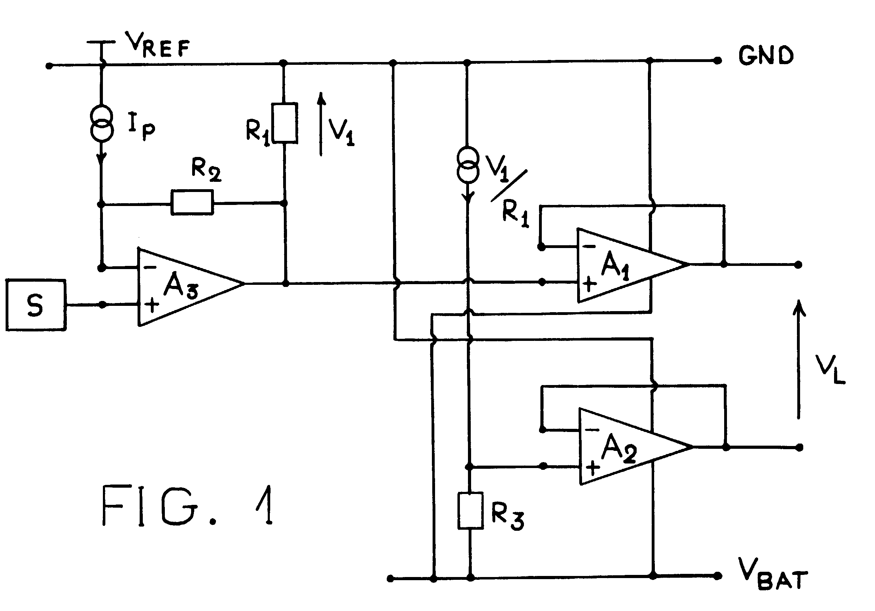

Figure 1 of the accompanying drawings is a circuit diagram of an output stage, which may be a monolithic integrated circuit, for a telephone interface circuit, which may be used as mentioned previously for both the supply to a subscriber line and the sending of a signal along the line.

First and second operational amplifiers $A_1$ and $A_2$ are connected between first and second terminals GND and $V_{BAT}$ of a supply voltage generator. Each of the operational amplifiers has a non-inverting input terminal, indicated by "+", an inverting input terminal, indicated by "-", and an output terminal which is connected to the inverting input terminal and forms a terminal for coupling to the subscriber line which is not shown in Figure 1.

A third operational amplifier $A_3$ also has a non-inverting input (+), an inverting input (-), and an output terminal, connected to a signal source S, a reference voltage $V_{REF}$ through a constant current generator $I_p$, and to the non-inverting input terminal of the operational amplifier $A_1$, respectively. The signal source S also represents the stages which precede the output stage and are used for the generation and amplification of signals. The reference voltage $V_{REF}$ maintains a potential somewhat higher than that of the GND terminal of the supply voltage generator, so that the constant current generator $I_p$ may operate correctly. The reference voltage may be produced by a second source of supply to the interface circuit.

The output terminal of the operational amplifier $A_3$ is connected to the first terminal GND of the supply voltage generator through a first resistance $R_1$. A second resistance $R_2$ is connected between the inverting input terminal and the output terminal of the operational amplifier $A_3$. The non-inverting input terminal of the operational amplifier $A_2$ is connected to the first and second terminals of the supply voltage generator through a current generator $V_1/R_1$ and a third resistance $R_3$, respectively. The resistance $R_3$ may, however, also be connected to a reference voltage separate from the second terminal of the supply voltage.

The voltage $V_1$ at the output of the operational amplifier $A_3$ is equal to the sum of the input signal voltage $V_{in}$ applied to the non-inverting terminal and the continuous voltage present across the resistance $R_2$:

$$V_1 = V_{in} - I_p R_2$$

The current generator $V_1/R_1$ may be constructed, for example, as a current mirror circuit, so that it supplies a current whose instantaneous value is equal to that of the current flowing in the resistance $R_1$. Consequently, if $R_3 = R_1$, the voltage at the non-inverting input terminal of the operational amplifier $A_2$ is equal to the voltage $V_1$. Thus, the instantaneous voltage $V_L$ between the output terminals of the two operational amplifiers $A_1$ and $A_2$, with which voltage the subscriber line is supplied, is:

$$V_L = |V_{BAT}| - 2I_p R_2 + 2V_{in}.$$

The "battery voltage" $V_{BAT}$ is the supply voltage of the operational amplifiers $A_1$ and $A_2$, to whose output terminals the telephone line is connected. The value of the voltage $V_{BAT}$ is prescribed by the Telephone Authority as a design specification, and therefore the constant term $2I_p R_2$ is used to determine in a suitable way the value of the voltage applied to the line in the absence of signals.

Since the telephone signals may have a voltage of the order of a number of volts (a typical value of $|V_{BAT}|$ may be 48 V), the voltage $2I_p R_2$ must also have a value of the order of a number of volts in order that the dynamics of the telephone signals may be maintained without difficulties. For this reason, the value of the voltage on the line depends to a not insignificant extent on the value of the constant current $I_p$ and of the resistance $R_2$. As stated previously, it is important for the efficiency of the whole system that the value of the supply voltage of the subscriber line should be as constant and accurate as possible, and therefore the value of the current $I_p$ must be kept constant even when the temperature varies and in the presence of jumps in the supply voltage of the interface circuit.

Particularly when the circuit is of the monolithic integrated type, these requirements necessitate solutions in the form of complex circuits, with consequently higher costs of design and a greater occupation of integration area.

According to a first aspect of the invention, there is provided an output stage as defined in the appended Claim 1.

According to a second aspect of the invention, there is provided an output stage as defined in the appended Claim 4.

According to a third aspect of the invention, there is provided a telephone interface circuit as defined in the appended Claim 5.

Preferred embodiments of the invention are defined in the other appended claims.

The invention will be further described, by way of example, with reference to the accompanying drawings, in which:

Figure 1 is a circuit diagram of a known type of output stage as described hereinbefore; and

Figure 2 is a circuit diagram of an output stage constituting an embodiment of the invention.

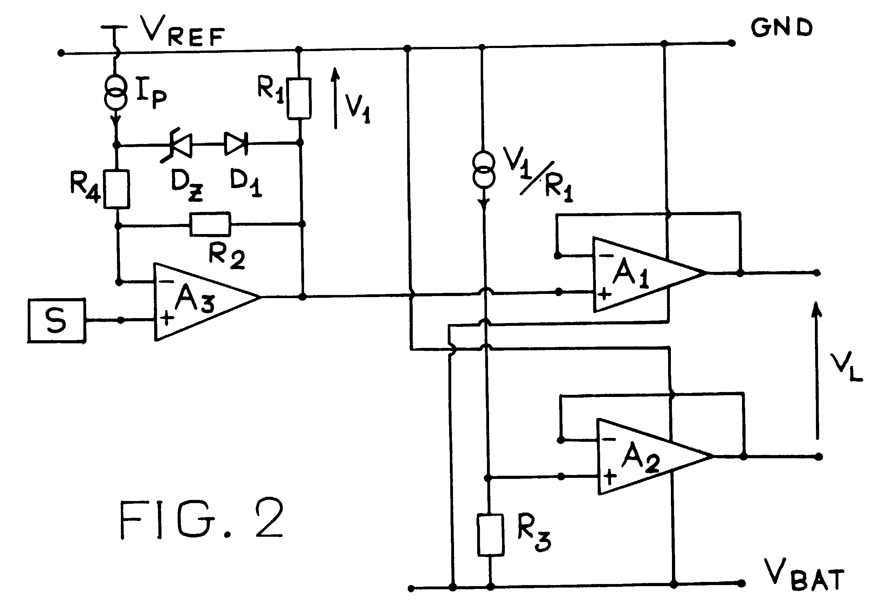

The same references refer to corresponding parts in the figures. The output stage of Figure 2 differs from that of Figure 1 by the addition of a fourth resistance $R_4$, a diode $D_1$, and a Zener diode $D_z$.

As shown in Figure 2, the fourth resistance $R_4$ is connected between the inverting input terminal of the operational amplifier $A_3$ and the constant current generator $I_p$ and the diodes $D_1$, $D_z$ are connected in series between the output terminal of the operational amplifier $A_3$ and constant current generator $I_p$. The cathode of the Zener diode $D_z$ and the cathode of the diode $D_1$ are connected to the constant current generator $I_p$ and to the output terminal of the operational amplifier $A_3$, respectively. Alternatively, the anode of the diode $D_1$ and the anode of the Zener diode $D_z$ may be connected to the constant current generator $I_p$ and to the output terminal of the operational amplifier $A_3$, respectively, without altering the circuit operation. When producing an output stage in the form of a monolithic integrated circuit, however, the specialist in this field may encounter differences in convenience from the technological point of view.

For the output stage of Figure 2:

$$V_1 = V_{in} - (V_z + V_D)\frac{R_2}{R_2 + R_4}$$

where $V_z$ and $V_D$ are the voltages across the terminals of the diodes $D_z$ and $D_1$, respectively, with $D_z$ conducting in the reverse direction according to a characteristic of the Zener type and $D_1$ conducting in the forward direction. $D_z$ conducts in the reverse direction when:

$$I_p > \frac{V_z + V_D}{R_2 + R_4}.$$

Consequently, by appropriate specification of the constant current generator $I_p$, taking into account the maximum possible variations of the value of the constant current and of the resistances $R_2$ and $R_4$, the output voltage $V_1$ may be kept independent of the current $I_p$.

Thus, greater precision of operation of the whole output stage is obtained, with consequent improved stability of the supply voltage supplied by the output stage to the subscriber line. There are consequent advantages for the planning and operation of the whole subscriber and exchange telephone system.

Compared with the known output stage, the design of the output stage is simpler in circuit terms, because strict tolerances on the value of the constant current $I_p$ are not required. Further, when the output is embodied in monolithic circuit form, a larger integration area is not necessary, since the addition of another resistance, the diode and the Zener diode is completely compensated for by the greater simplicity of the circuit constituting the constant current generator $I_p$. Moreover, the thermal coefficients of the two diodes are compensated, thus increasing the degree of independence of temperature variation.

**Claims**

1. An output stage for a telephone interface circuit for use between a subscriber line and a telephone exchange for supplying a substantially constant voltage to the line, the output stage comprising first and second operational amplifiers ($A_1$, $A_2$), each having a non-inverting input terminal (+), an inverting input terminal (-), and an output terminal connected to the inverting input terminal and for coupling to the subscriber line, the non-inverting input terminal (+) of the first operational amplifier ($A_1$) being connected to an output terminal of a third operational amplifier ($A_3$), which has a non-inverting input terminal (+) for coupling to a signal source (S) and an inverting input terminal (-) connected to a reference voltage ($V_{REF}$) through a constant current generator ($I_p$), the output terminal of the third operational amplifier ($A_3$) being connected to a first power supply terminal (GND) and to the inverting input terminal (-) of the third operational amplifier ($A_3$) through a first resistance ($R_1$) and a second resistance ($R_2$), respectively, the

non-inverting input terminal (+) of the second operational amplifier (A$_2$) being connected to the first power supply terminal (GND) and a second power supply terminal (V$_{BAT}$) through a current generator (V$_1$/R$_1$) capable of supplying a current proportional to the current flowing in the first resistance (R$_1$), and a third resistance (R$_3$), respectively, characterised in that a fourth resistance (R$_4$) is connected between the inverting input terminal (-) of the third operational amplifier (A$_3$) and the constant current generator (I$_p$), and a diode (D$_1$) and a Zener diode (D$_z$) are connected in series between the output terminal of the third operational amplifier (A$_3$) and the constant current generator (I$_p$).

2. An output stage as claimed in Claim 1, characterised in that the cathode of the diode (D$_1$) and the cathode of the Zener diode (D$_z$) are connected to the output terminal of the third operational amplifier (A$_3$) and to the constant current generator (I$_p$), respectively.

3. An output stage as claimed in Claim 1, characterised in that the anode of the diode (D$_1$) and the anode of the Zener diode (D$_z$) are connected to the constant current generator (I$_p$) and to the output terminal of the third operational amplifier (A$_3$), respectively.

4. An output stage for a telephone interface circuit for use between a subscriber line and a telephone exchange, comprising first and second operational amplifiers (A1, A2) having outputs for connection to the subscriber telephone line, and a third operational amplifier (A3) having an output coupled to a non-inverting input of the first operational amplifier (A1), to a first power supply terminal (GND) via a first resistance (R$_1$) and to an inverting input of the third operational amplifier (A3) via a second resistance (R$_2$), the inverting input of the third operational amplifier (A3) being connected to a constant current generator (I$_P$), characterised in that a further resistance (R4) is connected between the inverting input of the third operational amplifier (A3) and the constant current generator (I$_p$), and a zener diode (D$_2$) and a diode (D$_1$) are connected in series between the output of the third operational amplifier and the constant current generator (I$_p$).

5. A telephone interface circuit characterised by including an output stage as claimed in any one of the preceding claims.

**Patentansprüche**

1. Ausgangsstufe einer Telefonschnittstellenschaltung zur Verwendung zwischen einer Teilnehmerleitung und einer Fernsprechzentrale zur Einspeisung einer im wesentlichen konstanten Spannung in die Leitung, umfassend erste und zweite Operationsverstärker (A$_1$, A$_2$), die jeweils eine nicht-invertierende Eingangsklemme (+), eine invertierende Eingangsklemme (-) und eine mit der invertierenden Eingangsklemme verbundene Ausgangsklemme aufweisen, wobei zur Kopplung an die Teilnehmerleitung die nicht-invertierende Eingangsklemme (+) des ersten Operationsverstärkers (A$_1$) an einer Ausgangsklemme eines dritten Operationsverstärkers (A$_3$) angeschlossen ist, der eine nicht-invertierende Eingangsklemme (+) zur Kopplung an eine Signalquelle (S) und eine durch einen Gleichstromgenerator (I$_p$) an eine Referenzspannung (V$_{REF}$) angeschlossene, invertierende Eingangsklemme (-) aufweist, wobei die Ausgangsklemme des dritten Operationsverstärkers (A$_3$) an einer ersten Netzteilklemme (GND) und an der invertierenden Eingangsklemme (-) des dritten Operationsverstärkers (A$_3$) durch einen ersten Widerstand (R$_1$) beziehungsweise einen zweiten Widerstand (R$_2$) angeschlossen ist, und wobei die nicht-invertierende Eingangsklemme (+) des zweiten Operationsverstärkers (A$_2$) an der ersten Netzteilklemme (GND) und an einer zweiten Netzteilklemme (V$_{BAT}$) durch eine Stromquelle (V$_1$/R$_1$), die imstande ist, einen proportionalen Strom zu dem in dem ersten Widerstand (R$_1$) fließenden Strom zu liefern, beziehungsweise durch einen dritten Widerstand (R$_3$) angeschlossen ist, dadurch gekennzeichnet, daß ein vierter Widerstand (R$_4$) zwischen der invertierenden Eingangsklemme (-) des dritten Operationsverstärkers (A$_3$) und der Konstantstromquelle (I$_p$) angeschlossen ist, und eine Diode (D$_1$) und eine Zenerdiode (D$_z$) zwischen der Ausgangsklemme des dritten Operationsverstärkers (A$_3$) und der Konstantstromquelle (I$_p$) in Reihe angeschlossen sind.

2. Ausgangsstufe wie in Anspruch 1 beansprucht, dadurch gekennzeichnet, daß die Kathode der Diode (D$_1$) und die Kathode der Zenerdiode (D$_z$) an der Ausgangsklemme des dritten Operationsverstärkers (A$_3$) beziehungsweise an der Konstantstromquelle (I$_p$) angeschlossen sind.

3. Ausgangsstufe wie in Anspruch 1 beansprucht, dadurch gekennzeichnet, daß die Anode der Diode (D$_1$) und die Anode der Zenerdiode (D$_z$) an der Konstantstromquelle (I$_p$) beziehungsweise an der Ausgangsklemme des dritten Operationsverstärkers (A$_3$) angeschlossen sind.

4. Ausgangsstufe einer Telefonschnittstellenschaltung zur Verwendung zwischen einer Teilnehmerleitung und einer Fernsprechzentrale, umfassend erste und zweite Operationsverstärker (A$_1$, A$_2$), die Ausgänge zum Anschluß an der Teilnehmer-Telefonleitung aufweisen, und einen dritten Operationsverstärker (A$_3$), der einen Ausgang aufweist, der mit einem nicht-invertierenden Eingang eines ersten Operationsverstärkers ($A_1$), mit einer ersten Netzteilklemme (GND) über einen ersten Widerstand ($R_1$) und mit einem invertierenden Eingang eines dritten Operationsverstärkers ($A_3$) über einen zweiten Widerstand ($R_2$) gekoppelt ist, wobei der invertierende Eingang des dritten Operationsverstärkers ($A_3$) an einer Konstantstromquelle ($I_p$) angeschlossen ist, dadurch gekennzeichnet, daß ein weiterer Widerstand ($R_4$) zwischen dem invertierenden Eingang des dritten Operationsverstärkers ($A_3$) und der Konstantstromquelle ($I_p$) angeschlossen ist, und eine Diode ($D_1$) und eine Zenerdiode ($D_z$) zwischen der Ausgangsklemme des dritten Operationsverstärkers und der Konstantstromquelle ($I_p$) in Reihe angeschlossen sind.

5. Telefonschnittstellenschaltung, gekennzeichnet durch den Einschluß einer wie in einem der vorangehenden Ansprüche beanspruchten Ausgangsstufe.


**Revendications**

1. Etage de sortie pour un circuit d'interface de téléphone destiné à une utilisation entre une ligne d'abonné et un central téléphonique pour appliquer une tension sensiblement constante sur la ligne; l'étage de sortie comprenant des premier et second amplificateurs opérationnels ($A_1$, $A_2$), chacun comportant une borne d'entrée non inverseuse (+), une borne d'entrée inverseuse (-) et une borne de sortie connectée à la borne d'entrée inverseuse et pour réaliser un couplage sur la ligne d'abonné, la borne d'entrée non inverseuse (+) du premier amplificateur opérationnel ($A_1$) étant connectée à une borne de sortie d'un troisième amplificateur opérationnel ($A_3$) qui comporte une borne d'entrée non inverseuse (+) pour réaliser un couplage sur une source de signal (S) et une borne d'entrée inverseuse (-) connectée à une tension de référence ($V_{ref}$) par l'intermédiaire d'un générateur de courant constant ($I_p$), la borne de sortie du troisième amplificateur opérationnel ($A_3$) étant connectée à une première borne d'alimentation (GND) et à la borne d'entrée inverseuse (-) du troisième amplificateur opérationnel ($A_3$) par l'intermédiaire respectivement d'une première résistance ($R_1$) et d'une seconde résistance ($R_2$), la borne d'entrée non inverseuse (+) du second amplificateur opérationnel ($A_2$) étant connectée à la première borne d'alimentation (GND) et à une seconde borne d'alimentation ($V_{BAT}$) par l'intermédiaire d'un générateur de courant ($V_1/R_1$) permettant d'appliquer un courant proportionnel au courant qui circule respectivement dans la première résistance ($R_1$) et dans une troisième résistance ($R_3$), caractérisé en ce qu'une quatrième résistance ($R_4$) est connectée entre la borne d'entrée inverseuse (-) du troisième amplificateur opérationnel ($A_3$) et le générateur de courant constant ($I_p$), et une diode ($D_1$) ainsi qu'une diode Zener ($D_z$) sont connectées en série entre la borne de sortie du troisième amplificateur opérationnel ($A_3$) et le générateur de courant constant ($I_p$).

2. Etage de sortie selon la revendication 1, caractérisé en ce que la cathode de la diode ($D_1$) et la cathode de la diode Zener ($D_z$) sont connectées respectivement à la borne de sortie du troisième amplificateur opérationnel ($A_3$) et au générateur de courant constant ($I_p$).

3. Etage de sortie selon la revendication 1, caractérisé en ce que l'anode de la diode ($D_1$) et l'anode de la diode Zener ($D_z$) sont respectivement connectées au générateur de courant constant ($I_p$) et à la borne de sortie du troisième amplificateur opérationnel ($A_3$).

4. Etage de sortie pour un circuit d'interface de téléphone destiné à être utilisé entre une ligne d'abonné et un central téléphonique, comprenant des premier et second amplificateurs opérationnels ($A_1$, $A_2$) comportant des sorties pour une connexion à la ligne téléphonique d'abonné, et un troisième amplificateur opérationnel ($A_3$) comportant une sortie couplée à une entrée non inverseuse du premier amplificateur opérationnel ($A_1$), à une première borne d'alimentation (GND) via une première résistance ($R_1$) et à une entrée inverseuse du troisième amplificateur opérationnel ($A_3$) via une seconde résistance ($R_2$), l'entrée inverseuse du troisième amplificateur opérationnel ($A_3$) étant connectée à un générateur de courant constant ($I_p$), caractérisé en ce qu'une résistance supplémentaire ($R_4$) est connectée entre l'entrée inverseuse du troisième amplificateur opérationnel ($A_3$) et le générateur de courant constant ($I_p$), et une diode Zener ($D_z$) ainsi qu'une diode ($D_1$) sont connectées en série entre la sortie du troisième amplificateur opérationnel et le générateur de courant constant ($I_p$).

5. Circuit d'interface de téléphone caractérisé en ce qu'il inclut un étage de sortie selon l'une quelconque des revendications précédentes.

FIG. 1

EP 0 435 669 B1

FIG. 2